# EUROPÄISCHE PATENTSCHRIFT

(11) **EP 4 554 857 B1**
(45) Veröffentlichungstag und Bekanntmachung des Hinweises auf die Patenterteilung: **23.07.2025**
(21) Anmeldenummer: 23817648.1
(22) Anmeldetag: 24.11.2023
(51) Int. Cl.: B64D 11/00, E05D 3/02, E05D 5/04

(54) **ÜBERKOPF-GEPÄCKFACH**
OVERHEAD LUGGAGE COMPARTMENT
COMPARTIMENT À BAGAGES SUSPENDU

(30) Priorität: 25.11.2022 AT 508972022
(43) Veröffentlichungstag der Anmeldung: 21.05.2025
(73) Patentinhaber: FACC AG, 4910 Ried im Innkreis (AT)
(72) Erfinder: KAMMERER, Bernhard, 4755 Zell an der Pram (AT)
(74) Vertreter: SONN Patentanwälte GmbH & Co KG
(86) Internationale Anmeldenummer: PCT/AT2023/060411
(87) Internationale Veröffentlichungsnummer: WO 2024/108248

(56) Entgegenhaltungen:
- DE-A1- 102019 004 754
- US-A- 5 035 471
- US-A1- 2018 274 283
- US-A1- 2022 195 771
- US-B2- 10 077 111

## Beschreibung

Die Erfindung betrifft ein Überkopf-Gepäckfach für ein Flugzeug, aufweisend:
ein Gepäckfachgehäuse mit zwei Seitenteilen, einem Oberteil und einem Unterteil, welche einen Aufnahmeraum für Gepäckstücke einschließen,
eine Tür,
eine jeweils mit dem Oberteil und der Tür verbundene Scharniereinrichtung, mit welcher die Tür zwischen einer Offen- und einer Schließstellung gegenüber dem Gepäckfachgehäuse verschwenkbar ist.

Im Stand der Technik sind Überkopf-Gepäckfächer bekannt, in welche Passagiere während eines Fluges ihr Handgepäck verstauen können. Bei einer Ausführung von Überkopf-Gepäckfächern, welche auch als "shelf bin" bezeichnet wird, ist ein feststehendes Gepäckfachgehäuse vorgesehen, das mit einer Tür verschlossen wird. Am Gepäckfachgehäuse und an der Tür sind Scharniere angebracht, welche ein Hochschwenken der Tür von einer Schließin eine Offenstellung erlauben. Ein solches Gepäckfach wird beispielsweise in der US 10,077,111 B2 und der US 5,035,471 A beschrieben. Bei diesem Stand der Technik werden die Scharniere innenseitig am Gepäckfachgehäuse und an der Tür befestigt. Nachteilig darin ist jedoch, dass die Scharniere weit in den Aufnahmeraum für die Gepäckstücke hineinstehen. Zudem liegt die Schwenkachse der Scharniere deutlich unter der Ebene des Oberteils des Gepäckfachgehäuses. Schließlich wird das Gepäckfachgehäuse durch die Anbringung der Scharniere beim Stand der Technik stark belastet.

Der allgemeine Stand der Technik wird weiters durch DE 10 2019 004754 A1 und WO 2012/003964 A1 illustriert.

Demgegenüber besteht die Aufgabe der vorliegenden Erfindung darin, zumindest einzelne Nachteile des Standes der Technik zu lindern bzw. zu beheben. Die Erfindung setzt sich vorzugsweise zum Ziel, ein Überkopf-Gepäckfach des Typs "shelf bin" zu schaffen, bei dem die Aufhängung der Tür am Gepäckfachgehäuse den für die Gepäckstücke zur Verfügung stehenden Aufnahmeraum weniger einschränkt, die Belastung des Oberteils des Gepäckfachgehäuses reduziert und schließlich eine günstige Schwenkbewegung der Tür ermöglicht.

Diese Aufgabe wird durch ein Überkopf-Gepäckfach nach Anspruch 1 und ein Flugzeug nach Anspruch 13 gelöst. Bevorzugte Ausführungsformen sind in den abhängigen Ansprüchen angegeben.

Erfindungsgemäß weist die Scharniereinrichtung eine Montageklammer mit einem oberen Montageschenkel und einem unteren Montageschenkel auf, wobei der obere Montageschenkel an der Oberseite des Oberteils und der untere Montageschenkel an der Unterseite des Oberteils angebracht ist.

Für die Zwecke dieser Offenbarung beziehen sich die Orts- und Richtungsangaben, wie "oben", "unten", "horizontal", "vertikal", auf den bestimmungsgemäßen Montagezustand des Überkopf-Gepäckfaches im Flugzeugrumpf bei horizontaler Ausrichtung des Flugzeuges.

Somit wird die Scharniereinrichtung über die Montageklammer an dem Oberteil des Gepäckfachgehäuses montiert. Die Montageklammer weist den oberen und den unteren Montageschenkel auf, welche im Wesentlichen parallel und in einem Abstand zueinander angeordnet sind, wobei das Oberteil des Gepäckfachgehäuses zwischen dem oberen und dem unteren Montageschenkel der Montageklammer angeordnet ist. Das Oberteil ist vorzugsweise als obere Gehäuseplatte (englisch: "top panel") ausgeführt. Die Montageklammer kann einen vorderen, d.h. einen dem Benutzer des Überkopf-Gepäckfachs zugewandten, Längsrand des Oberteils umgreifen. Die erfindungsgemäße Ausführung der Scharniereinrichtung bringt eine Reihe von Vorteilen mit sich. Durch das Umgreifen des Oberteils des Gepäckfachgehäuses wird eine stabile Aufhängung der Tür ermöglicht. Dadurch können der untere und der obere Montageschenkel flach ausgeführt werden, wodurch der vom Oberteil nach oben hin begrenzte Aufnahmeraum des Gepäckfachgehäuses kaum eingeschränkt wird. Mit der Montageklammer können zudem die beim Verschwenken der Tür auftretenden Drehmomente besonders günstig aufgenommen werden. Das Oberteil des Gepäckfachgehäuses kann wirksam vor Schwächungen und Schäden geschützt werden.

Um den Aufnahmeraum für die Gepäckstücke möglichst wenig einzuschränken, ist es günstig, wenn sich die Schwenkachse der Scharniereinrichtung in einer Ebene zwischen der Ober- und der Unterseite des Oberteils des Gepäckfachgehäuses erstreckt. Somit befindet sich die Schwenkachse zwischen den gedachten Verlängerungen der Ober- und der Unterseite des Oberteils des Gepäckfachgehäuses. Dadurch ist die Scharniereinrichtung in Höhenrichtung überlappend mit dem Oberteil des Gepäckfachgehäuses angeordnet. Da sich die Schwenkachse nicht wie beim Stand der Technik unter dem Oberteil, sondern auf Höhe des Oberteils befindet, kann der für die Gepäckstücke zur Verfügung stehende Aufnahmeraum vergrößert werden. Besonders günstig ist dabei, dass das Einladen des Gepäckstücks erleichtert wird.

Bei einer bevorzugten Ausführungsform erstreckt sich die Schwenkachse der Scharniereinrichtung in einer Ebene im Wesentlichen mittig zwischen der Ober- und der Unterseite des Oberteils des Gepäckfachgehäuses. Bei dieser Ausführung wird die Schwenkachse auf Höhe der Mittelebene des Oberteils angeordnet, wodurch einerseits der Aufnahmeraum innerhalb des Gepäckfachgehäuses freigehalten und andererseits eine günstige Kraftübertragung bei der Verschwenkung der Tür erzielt wird.

Zur Montage der Scharniereinrichtung am Gepäckfachgehäuse ist es günstig, wenn der obere und der untere Montageschenkel der Scharniereinrichtung zueinander verschwenkbar sind. Bei der Montage können der obere und der untere Montageschenkel in einem aufgeklappten Zustand auf das Oberteil aufgeschoben und danach in einen eingeklappten Zustand überführt werden, um den oberen Montageschenkel an der Oberseite und den unteren Montageschenkel an der Unterseite des Oberteils anzuordnen. Im montierten, eingeklappten Zustand erstrecken sich der obere und der untere Montageschenkel bevorzugt im Wesentlichen parallel und in einem Abstand zueinander, welcher im Wesentlichen der Wandstärke des Oberteils des Gepäckfachgehäuses entspricht.

Um die Montageklammer sicher am Oberteil des Gepäckfachgehäuses zu halten, sind der obere und der untere Montageschenkel der Scharniereinrichtung bei einer bevorzugten Ausführungsform über eine Schraubverbindung miteinander verbunden.

Bei einer bevorzugten Ausführungsform durchsetzt die Schraubverbindung zwischen dem oberen und dem unteren Montageschenkel der Scharniereinrichtung eine Aussparung des Oberteils des Gepäckfachgehäuses. Durch die Aussparung kann die Montageposition der Montageklammer in zumindest eine Richtung, vorzugsweise in horizontaler Richtung senkrecht zum längsseitigen Endbereich des Oberteils, d.h. nach vorne bzw. nach hinten, variiert werden.

Um die Tür verschwenkbar an dem währenddessen ortsfesten Gepäckfachgehäuse anzuordnen, weist die Scharniereinrichtung bei einer bevorzugten Ausführungsform einen Schwenkarm auf, welcher an der Innenseite der Tür befestigt ist. Der Schwenkarm ist um die Schwenkachse verschwenkbar gelagert, so dass die am Schwenkarm befestigte Tür von der die Ladeöffnung des Gepäckfachgehäuses verschließenden Schließ- in die die Ladeöffnung des Gepäckfachgehäuses freigebende Offenstellung verschwenkt werden kann

Zur Ausbildung der Schwenkachse für die Verschwenkung der Tür relativ zum Gepäckfachgehäuse ist es günstig, wenn die Scharniereinrichtung zumindest ein mit der Montageklammer verbundenes erstes Scharnierteil, insbesondere ein erstes Rundteil, und zumindest ein mit dem Schwenkarm verbundenes zweites Scharnierteil, insbesondere ein zweites Rundteil, aufweist. Bevorzugt ist das zweite Scharnierteil verschwenkbar gegenüber dem ersten Scharnierteil gelagert.

An der Oberseite des Oberteils des Gepäckfachgehäuses kann eine Beleuchtungseinrichtung angeordnet sein, welche insbesondere eine Anzahl von LED-Beleuchtungselementen aufweist. Vorteilhafterweise schränkt die Scharniereinrichtung den Einbauraum für die Beleuchtungseinrichtung kaum ein. Die Beleuchtungseinrichtung ist bevorzugt als in Flugzeugrumpflängsrichtung langgestrecktes Flachgehäuse ausgeführt. Zudem kann die Beleuchtungseinrichtung eine integrierte Belüftungseinheit zur Abgabe von Luft in die Flugzeugkabine aufweisen.

Um die Beleuchtung eines Gangbereichs auch in der Offenstellung der Tür sicherzustellen, ist bei einer bevorzugten Ausführungsform in der Offenstellung der Tür ein Längsspalt zwischen der Oberseite des Oberteils des Gepäckfachgehäuses und der, bezogen auf die Schließstellung der Tür, oberen Längsseite der Tür ausgebildet. Bei geöffneter Tür kann Licht von der Beleuchtungseinrichtung auf dem Oberteil durch den ersten Längsspalt in den Gangbereich des Flugzeugs durchtreten. Zur Ausbildung des Längsspalts weist die Scharniereinrichtung bevorzugt einen langgestreckten Schwenkarm auf, mit dem die Tür in die Offenstellung geschwenkt wird.

Zur Unterstützung der Verschwenkung der Tür von der Schließ- in die Offenstellung weist die Scharniereinrichtung bei einer bevorzugten Ausführungsform ein Federelement, insbesondere eine Torsionsfeder, auf.

Zur Verbesserung der Öffnungskinematik weist die Scharniereinrichtung bei einer bevorzugten Ausführungsform ein Dämpferelement, insbesondere einen Torsionsdämpfer, zum Dämpfen der Verschwenkung der Tür von der Schließ- in die Offenstellung auf.

Bei einer bevorzugten Ausführungsform ist das Überkopf-Gepäckfach über Anbindungselemente, welche vorzugsweise als tie rods ausgeführt sind, mit dem Flugzeugrumpf verbunden. Besonders bevorzugt ist es, wenn an jeder Querseite des Überkopf-Gepäckfaches ein hinteres Anbindungselement und ein vorderes (d.h. näher an der Tür angeordnetes) Anbindungselement vorgesehen sind. Bevorzugt ist zumindest eines der Anbindungselemente, vorzugsweise die beiden vorderen Anbindungselemente, in der Länge verstellbar, so dass ein Toleranzausgleich durchgeführt werden kann.

Die Erfindung wird nachstehend anhand eines in den Zeichnungen dargestellten Ausführungsbeispiels weiter erläutert.
Fig. 1 zeigt eine Seitenansicht eines erfindungsgemäßen Überkopf-Gepäckfaches zur Montage in einer Flugzeugkabine.
Fig. 2 zeigt eine 3D-Ansicht des Überkopf-Gepäckfaches der Fig. 1.
Fig. 3 zeigt eine Schnittansicht des Überkopf-Gepäckfaches der Fig. 1 und Fig. 2 im Bereich einer erfindungsgemäßen Scharniereinrichtung, mit welcher eine Tür des Überkopf-Gepäckfaches der Fig. 1 und Fig. 2 zwischen einer Schließ- und einer Offenstellung verschwenkt werden kann.
Fig. 4 zeigt eine Schnittansicht der Scharniereinrichtung gemäß Fig. 1 bis 3 im montierten Zustand an einem Oberteil (top panel) eines Gepäckfachgehäuses.
Fig. 5 zeigt eine schaubildliche Ansicht der Scharniereinrichtung gemäß einer der Fig. 1 bis 4.

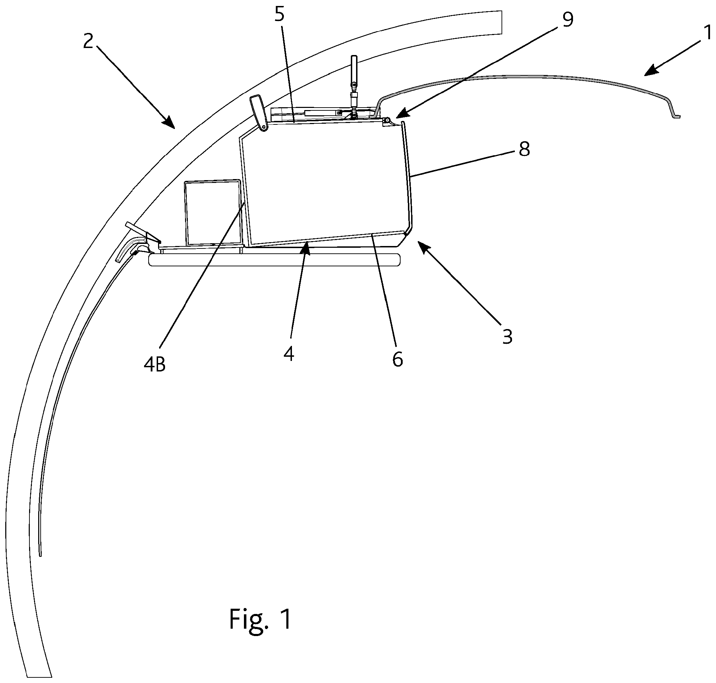

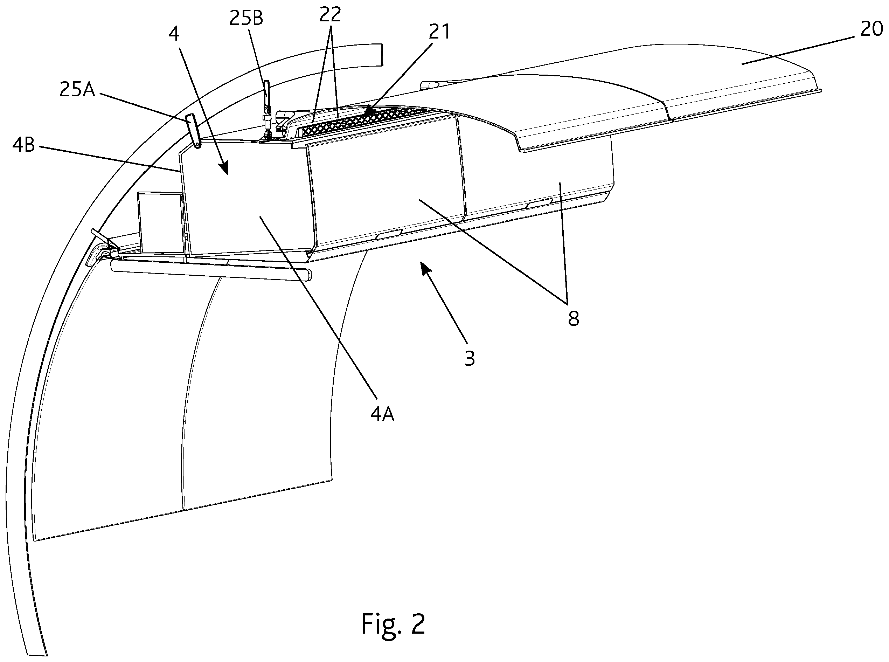

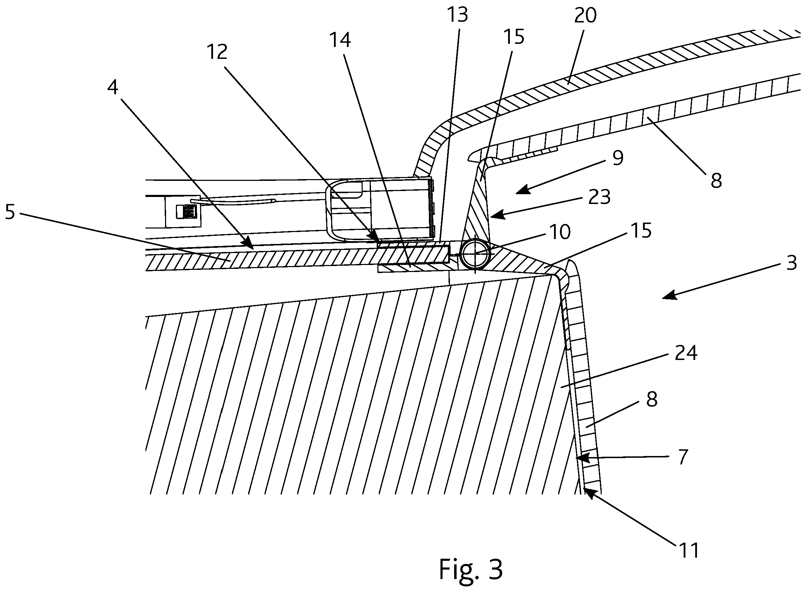

Fig. 1 und Fig. 2 zeigen einen Ausschnitt einer Flugzeugkabine 1 im Inneren eines Flugzeugrumpfes eines Flugzeugs 2. In der Flugzeugkabine 1 ist zumindest ein Überkopf-Gepäckfach 3 montiert. Je nach Ausführung können mehrere Überkopf-Gepäckfächer entlang der Flugzeugkabine, insbesondere neben einem Gang, angeordnet sein. Das Überkopf-Gepäckfach 3 weist ein Gepäckfachgehäuse 4 mit zwei Seitenteilen 4A auf, welche oberseitig über ein Oberteil 5, unterseitig über ein Unterteil 6 und rückseitig über eine Rückwand 4B miteinander verbunden sind, so dass davon ein Aufnahmeraum 7 für ein (Gepäckstück 24 begrenzt wird (vgl. Fig. 3). An der dem Benutzer zugewandten Vorderseite des Überkopf-Gepäckfaches 3 ist zumindest eine Tür 8 vorgesehen, die jeweils über zumindest eine Scharniereinrichtung 9 mit dem Gepäckfachgehäuse 4 verbunden ist. In der gezeigten Ausführung sind zwei Türen 8 vorgesehen.

Wie aus Fig. 3 bis Fig. 5 ersichtlich, bildet die Scharniereinrichtung 9 eine in Längsrichtung des Überkopf-Gepäckfaches 3, d.h. in Richtung der Flugzeug-Längsachse, verlaufende Schwenkachse 10, um welche die Tür 8 zwischen einer eine vorderseitige Ladeöffnung 11 freigebenden Offenstellung und einer die vorderseitige Ladeöffnung 11 verschließenden Schließstellung verschwenkbar ist. In Fig. 3 sind die zwei Türen 8 zu sehen, wobei die eine Tür 8 in der Schließ- und die andere Tür 8 in der Offenstellung dargestellt ist.

Wie aus Fig. 3 bis Fig. 5 ersichtlich, weist die Scharniereinrichtung 9 eine Montageklammer 12 mit einem oberen Montageschenkel 13 und einem unteren Montageschenkel 14 auf. Der obere Montageschenkel 13 liegt an der Oberseite des Oberteils 5 und der untere Montageschenkel 14 liegt an der Unterseite des Oberteils 5 an. Der obere 13 und der untere Montageschenkel 14 können geriffelte Innenseiten aufweisen, um den Halt am Oberteil 5 zu verbessern. Zudem weist die Scharniereinrichtung 9 einen Schwenkarm 15 auf, welcher am einen Ende um die Schwenkachse 10 verschwenkbar gelagert und am anderen Ende an der Innenseite der Tür 8 befestigt ist.

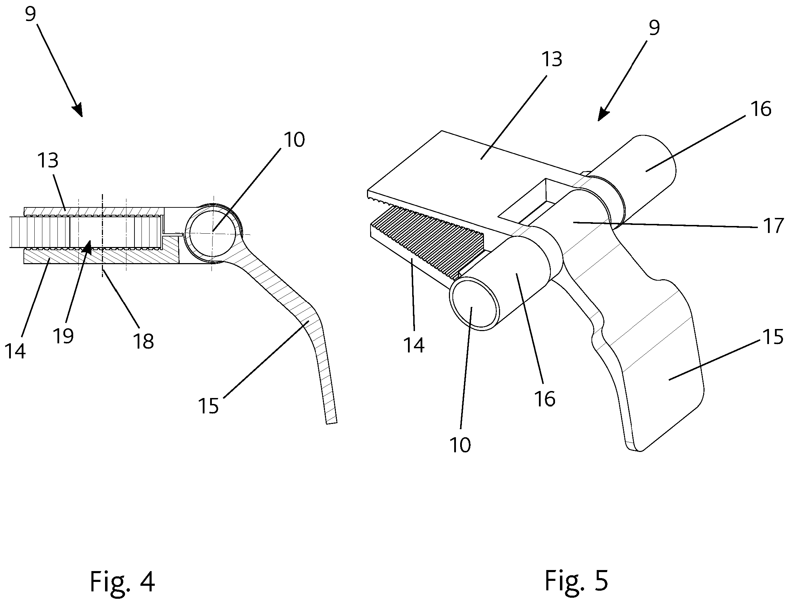

Wie aus Fig. 4 und Fig. 5 ersichtlich, weist die Scharniereinrichtung 9 zur Ausbildung der Schwenkachse 10 zwei ortsfeste, in Längsrichtung des Gepäckfachgehäuses 4 voneinander beabstandete erste Scharnierteile 16, hier erste Rundteile, auf, welche in der gezeigten Ausführung einteilig mit dem unteren Montageschenkel 14 verbunden sind. Mit dem Schwenkarm 15 ist ein zweites Scharnierteil 17, hier ein zweites Rundteil, verbunden, welches gegenüber den ersten Scharnierteilen 16 drehbar gelagert ist. In der gezeigten Ausführung ist das zweite Scharnierteil 17 einteilig mit dem Schwenkarm 15 verbunden. Der obere Montageschenkel 13 ist verschwenkbar gegenüber dem unteren Montageschenkel 14 gelagert.

Wie aus Fig 4 ersichtlich, befindet sich die Schwenkachse 10 der Scharniereinrichtung 9 in einer horizontalen Ebene mittig zwischen der Ober- und der Unterseite des Oberteils 5 des Gepäckfachgehäuses 4.

Wie aus Fig. 4 ersichtlich, sind der obere Montageschenkel 13 und der untere Montageschenkel 14 der Scharniereinrichtung 9 zueinander verschwenkbar (vgl. Doppelpfeil 9A in Fig. 4). Der Schwenkarm 15 ist beim Öffnen bzw. Schließen der Tür 8 in Pfeilrichtung 9B verschwenkbar. Bei der Montage wird die Montageklammer 12 im aufgeklappten Zustand auf das Oberteil 5 aufgeschoben und in der gewünschten Stellung zusammengeklappt. In der gezeigten Ausführung werden der obere Montageschenkel 13 und der untere Montageschenkel 14 der Scharniereinrichtung 9 über eine Schraubverbindung 18 miteinander verbunden, welche in der Zeichnung mit einer strichlierten Linie angedeutet ist. Die Schraubverbindung kann eine oder mehrere Schrauben aufweisen. In der gezeigten Ausführung durchsetzt die Schraubverbindung 18 eine Aussparung 19 des Oberteils 5 des Gepäckfachgehäuses 4. Die Aussparung 19 ist in horizontaler Richtung senkrecht zur Längskante des Oberteils 5 langgestreckt, um die Montageposition der Montageklammer 12 verändern zu können.

Wie am besten aus Fig. 2 ersichtlich, ist an der Oberseite des Oberteils 5 des Gepäckfachgehäuses 4 unterhalb eines Deckenpaneels 20 eine Beleuchtungs- und Belüftungseinrichtung 21 montiert, mit welcher Licht und Luft in die Flugzeugkabine abgegeben werden können. Die Beleuchtungs- und Belüftungseinrichtung weist einzelne Beleuchtungselemente 22, insbesondere LEDs, auf, welche an einem gitterförmigen Träger vorgesehen sind, der sich entlang eines vorderseitigen Luftauslasses der Beleuchtungs- und Belüftungseinrichtung 21 erstreckt. Aufgrund des Schwenkarms 15 wird in der Offenstellung der Tür 8 ein Längsspalt 23 zwischen der Oberseite des Oberteils 5 des Gepäckfachgehäuses 4 und der, bezogen auf die Schließstellung der Tür 8, oberen Längsseite der Tür 8 ausgebildet.

Die Scharniereinrichtung 9 kann ein (nicht gezeigtes) Federelement, insbesondere eine Torsionsfeder, zur Unterstützung der Verschwenkung der Tür von der Schließ- in die Offenstellung aufweisen.

Weiters kann die Scharniereinrichtung 9 ein (nicht gezeigtes) Dämpferelement, insbesondere einen Torsionsdämpfer, zum Dämpfen der Verschwenkung der Tür von der Schließ- in die Offenstellung aufweisen. Das Feder- und/oder das Dämpferelement können im Inneren des ersten 16 und/oder zweiten Scharnierteils 17 aufgenommen sein.

Wie aus Fig. 1 und Fig. 2 ersichtlich, ist das Überkopf-Gepäckfach 3 über Anbindungselemente 25 mit dem Flugzeugrumpf verbunden. Das oben beschriebene Überkopf-Gepäckfach 3 mit der Scharniereinrichtung 9 eignet sich für eine besonders großvolumige Ausführung des Aufnahmeraums 7. Bei dieser Ausführung kann das Überkopf-Gepäckfach an jeder Querseite ein hinteres Anbindungselement 25A und ein vorderes Anbindungselement 25B aufweisen Da sich der Schwerpunkt des Überkopf-Gepäckfachs 3 samt Gepäck im Wesentlichen in der Mitte der vier Anbindungselemente 25 befindet, verteilt sich die Kraft gleichmäßig, so dass eine besonders gewichtsparende Ausführung erzielt werden kann. Bevorzugt ist zumindest eines der Anbindungselemente 25, vorzugsweise die beiden vorderen Anbindungselemente 25B, in der Länge verstellbar, so dass ein Toleranzausgleich durchgeführt werden kann.

### Bezugsziffernliste:

1 Flugzeugkabine
2 Flugzeug
3 Überkopf-Gepäckfach
4 Gepäckfachgehäuse
4A Seitenteile
4B Rückwand
5 Oberteil
6 Unterteil
7 Aufnahmeraum
8 Tür
9 Scharniereinrichtung
10 Schwenkachse
11 Ladeöffnung
12 Montageklammer
13 oberer Montageschenkel
14 unterer Montageschenkel
15 Schwenkarm
16 erste Scharnierteile
17 zweites Scharnierteil
18 Schraubverbindung
19 Aussparung
20 Deckenpaneel
21 Beleuchtungs- und Belüftungseinrichtung
22 Beleuchtungselemente
23 Längsspalt
24 Gepäckstück
25 Anbindungselemente
25A hinteres Anbindungselement
25B vorderes Anbindungselement

## Patentansprüche

1. Überkopf-Gepäckfach für ein Flugzeug, aufweisend:
ein Gepäckfachgehäuse (4) mit zwei Seitenteilen (4A), einem Oberteil (5) und einem Unterteil (6), welche einen Aufnahmeraum (7) für Gepäckstücke einschließen,
eine Tür (8),
eine jeweils mit dem Oberteil (5) und der Tür (8) verbundene Scharniereinrichtung (9), mit welcher die Tür (8) zwischen einer Offen- und einer Schließstellung gegenüber dem Gepäckfachgehäuse (4) verschwenkbar ist,
**dadurch gekennzeichnet, dass**
die Scharniereinrichtung (9) eine Montageklammer (12) mit einem oberen Montageschenkel (13) und einem unteren Montageschenkel (14) aufweist, wobei der obere Montageschenkel (13) an der Oberseite des Oberteils (5) und der untere Montageschenkel (14) an der Unterseite des Oberteils (5) angebracht ist.

2. Überkopf-Gepäckfach nach Anspruch 1, **dadurch gekennzeichnet, dass** sich die Schwenkachse (10) der Scharniereinrichtung (9) in einer Ebene zwischen der Ober- und der Unterseite des Oberteils (5) des Gepäckfachgehäuses (4) erstreckt.

3. Überkopf-Gepäckfach nach Anspruch 2, **dadurch gekennzeichnet, dass** sich die Schwenkachse (10) der Scharniereinrichtung (9) in einer Ebene im Wesentlichen mittig zwischen der Ober- und der Unterseite des Oberteils (5) des Gepäckfachgehäuses (4) erstreckt.

4. Überkopf-Gepäckfach nach einem der Ansprüche 1 bis 3, **dadurch gekennzeichnet, dass** der obere (13) und der untere Montageschenkel (14) der Scharniereinrichtung (9) zueinander verschwenkbar sind.

5. Überkopf-Gepäckfach nach einem der Ansprüche 1 bis 4, **dadurch gekennzeichnet, dass** der obere (13) und der untere Montageschenkel (14) der Scharniereinrichtung (9) über eine Schraubverbindung (18) miteinander verbunden sind.

6. Überkopf-Gepäckfach nach Anspruch 5, **dadurch gekennzeichnet, dass** die Schraubverbindung (19) zwischen dem oberen (13) und dem unteren Montageschenkel (14) der Scharniereinrichtung (9) eine Aussparung (19) des Oberteils (5) des Gepäckfachgehäuses (4) durchsetzt.

7. Überkopf-Gepäckfach nach einem der Ansprüche 1 bis 6, **dadurch gekennzeichnet, dass** die Scharniereinrichtung (9) einen Schwenkarm (15) aufweist, welcher an der Innenseite der Tür (8) befestigt ist.

8. Überkopf-Gepäckfach nach Anspruch 7, **dadurch gekennzeichnet, dass** die Scharniereinrichtung (9) zumindest ein mit der Montageklammer (12) verbundenes erstes Scharnierteil (16), insbesondere ein erstes Rundteil, und zumindest ein mit dem Schwenkarm (15) verbundenes zweites Scharnierteil (17), insbesondere ein zweites Rundteil, aufweist.

9. Überkopf-Gepäckfach nach einem der Ansprüche 1 bis 8, **dadurch gekennzeichnet, dass** eine Beleuchtungseinrichtung (21) an der Oberseite des Oberteils (5) des Gepäckfachgehäuses (4) angeordnet ist.

10. Überkopf-Gepäckfach nach einem der Ansprüche 1 bis 8, **dadurch gekennzeichnet, dass** in der Offenstellung der Tür (8) ein Längsspalt (25) zwischen der Oberseite des Oberteils (5) des Gepäckfachgehäuses (4) und der, bezogen auf die Schließstellung der Tür (8), oberen Längsseite der Tür (8) ausgebildet ist.

11. Überkopf-Gepäckfach nach einem der Ansprüche 1 bis 10, **dadurch gekennzeichnet, dass** die Scharniereinrichtung (9) ein Federelement, insbesondere eine Torsionsfeder, zur Unterstützung der Verschwenkung der Tür (8) von der Schließ- in die Offenstellung aufweist.

12. Überkopf-Gepäckfach nach einem der Ansprüche 1 bis 11, **dadurch gekennzeichnet, dass** die Scharniereinrichtung (9) ein Dämpferelement, insbesondere einen Torsionsdämpfer, zum Dämpfen der Verschwenkung der Tür (8) von der Schließ- in die Offenstellung aufweist.

13. Flugzeug, aufweisend:
einen Flugzeugrumpf mit einer Flugzeugkabine (1),
ein Überkopf-Gepäckfach (3) nach einem der Ansprüche 1 bis 12, welches in der Flugzeugkabine (1) montiert ist.

## Claims

1. Overhead luggage compartment for an aircraft, comprising:
a luggage compartment housing (4) with two side parts (4A), an upper part (5) and a lower part (6), which enclose a receiving space (7) for pieces of luggage,
a door (8),
a hinge device (9) connected to the upper part (5) and the door (8), respectively, the door (8) by means of the hinge device (9) being pivotable relative to the luggage compartment housing (4) between an open position and a closed position,
**characterized in that**
the hinge device (9) comprises a mounting clamp (12) having an upper mounting leg (13) and a lower mounting leg (14), the upper mounting leg (13) being attached to the upper side of the upper part (5) and the lower mounting leg (14) being attached to the lower side of the upper part (5).

2. Overhead luggage compartment according to claim 1, **characterized in that** the pivot axis (10) of the hinge device (9) extends in a plane between the upper and lower sides of the upper part (5) of the luggage compartment housing (4).

3. Overhead luggage compartment according to claim 2, **characterized in that** the pivot axis (10) of the hinge device (9) extends in a plane essentially centrally between the upper and lower sides of the upper part (5) of the luggage compartment housing (4).

4. Overhead luggage compartment according to any one of claims 1 to 3, **characterized in that** the upper (13) and lower mounting legs (14) of the hinge device (9) are pivotable relative to each other.

5. Overhead luggage compartment according to any one of claims 1 to 4, **characterized in that** the upper (13) and lower mounting legs (14) of the hinge device (9) are connected to each other by a screw connection (18).

6. Overhead luggage compartment according to claim 5, **characterized in that** the screw connection (19) between the upper (13) and lower mounting legs (14) of the hinge device (9) passes through a recess (19) in the upper part (5) of the luggage compartment housing (4).

7. Overhead luggage compartment according to any one of claims 1 to 6, **characterized in that** the hinge device (9) comprises a pivot arm (15) which is attached to the inside of the door (8).

8. Overhead luggage compartment according to claim 7, **characterized in that** the hinge device (9) comprises at least one first hinge part (16), in particular a first round part, connected to the mounting clamp (12), and at least one second hinge part (17), in particular a second round part, connected to the pivot arm (15).

9. Overhead luggage compartment according to any one of claims 1 to 8, **characterized in that** a lighting device (21) is arranged on the upper side of the upper part (5) of the luggage compartment housing (4).

10. Overhead luggage compartment according to any one of claims 1 to 8, **characterized in that** in the open position of the door (8), a longitudinal gap (25) is formed between the upper side of the upper part (5) of the luggage compartment housing (4) and the upper longitudinal side of the door (8) relative to the closed position of the door (8).

11. Overhead luggage compartment according to any one of claims 1 to 10, **characterized in that** the hinge device (9) comprises a spring element, in particular a torsion spring, for assisting in pivoting the door (8) from the closed to the open position.

12. Overhead luggage compartment according to any one of claims 1 to 11, **characterized in that** the hinge device (9) comprises a damper element, in particular a torsion damper, for damping the pivoting of the door (8) from the closed to the open position.

13. Aircraft, comprising:
an aircraft fuselage with an aircraft cabin (1),
an overhead luggage compartment (3) according to any one of claims 1 to 12, which is mounted in the aircraft cabin (1).

## Revendications

1. Compartiment à bagages supérieur pour un avion, comprenant :
un boîtier de compartiment à bagages (4) avec deux parties latérales (4A), une partie supérieure (5) et une partie inférieure (6), qui délimitent un espace de réception (7) pour des bagages,
une porte (8),
un dispositif de charnière (9) relié respectivement à la partie supérieure (5) et à la porte (8), avec lequel la porte (8) peut pivoter entre une position ouverte et une position fermée par rapport au boîtier du compartiment à bagages (4),
**caractérisé en ce que**
le dispositif de charnière (9) comprend une pince de montage (12) avec une patte de montage supérieure (13) et une patte de montage inférieure (14), la patte de montage supérieure (13) étant fixée sur le côté supérieur de la partie supérieure (5) et la patte de montage inférieure (14) étant fixée sur le côté inférieur de la partie supérieure (5).

2. Compartiment à bagages supérieur selon la revendication 1, **caractérisé en ce que** l'axe de pivotement (10) du dispositif de charnière (9) s'étend dans un plan entre le côté supérieur et le côté inférieur de la partie supérieure (5) du boîtier du compartiment à bagages (4).

3. Compartiment à bagages supérieur selon la revendication 2, **caractérisé en ce que** l'axe de pivotement (10) du dispositif de charnière (9) s'étend dans un plan sensiblement au milieu entre le côté supérieur et le côté inférieur de la partie supérieure (5) du boîtier du compartiment à bagages (4).

4. Compartiment à bagages supérieur selon l'une des revendications 1 à 3, **caractérisé en ce que** la patte de montage supérieure (13) et la patte de montage inférieure (14) du dispositif de charnière (9) peuvent pivoter l'une par rapport à l'autre.

5. Compartiment à bagages supérieur selon l'une des revendications 1 à 4, **caractérisé en ce que** la patte de montage supérieure (13) et la patte de montage inférieure (14) du dispositif de charnière (9) sont reliées l'une à l'autre par une liaison vissée (18).

6. Compartiment à bagages supérieur selon la revendication 5, **caractérisé en ce que** la liaison vissée (19) entre la patte de montage supérieure (13) et la patte de montage inférieure (14) du dispositif de charnière (9) traverse un évidement (19) de la partie supérieure (5) du boîtier du compartiment à bagages (4).

7. Compartiment à bagages supérieur selon l'une des revendications 1 à 6, **caractérisé en ce que** le dispositif de charnière (9) comprend un bras pivotant (15) qui est fixé sur le côté intérieur de la porte (8).

8. Compartiment à bagages supérieur selon la revendication 7, **caractérisé en ce que** le dispositif de charnière (9) comprend au moins une première partie de charnière (16), en particulier une première partie ronde, reliée à la pince de montage (12), et au moins une deuxième partie de charnière (17), en particulier une deuxième partie ronde, reliée au bras pivotant (15).

9. Compartiment à bagages supérieur selon l'une des revendications 1 à 8, **caractérisé en ce qu'**un dispositif d'éclairage (21) est disposé sur le côté supérieur de la partie supérieure (5) du boîtier du compartiment à bagages (4).

10. Compartiment à bagages supérieur selon l'une des revendications 1 à 8, **caractérisé en ce que**, dans la position ouverte de la porte (8), une fente longitudinale (25) est formée entre le côté supérieur de la partie supérieure (5) du boîtier du compartiment à bagages (4) et le côté longitudinal supérieur de la porte (8) par rapport à la position fermée de la porte (8).

11. Compartiment à bagages supérieur selon l'une des revendications 1 à 10, **caractérisé en ce que** le dispositif de charnière (9) comprend un élément élastique, en particulier un ressort de torsion, pour faciliter le pivotement de la porte (8) de la position fermée à la position ouverte.

12. Compartiment à bagages supérieur selon l'une des revendications 1 à 11, **caractérisé en ce que** le dispositif de charnière (9) comprend un élément amortisseur, en particulier un amortisseur de torsion, pour amortir le pivotement de la porte (8) de la position fermée à la position ouverte.

13. Avion, comprenant:
un fuselage d'avion avec une cabine d'avion (1),
un compartiment à bagages supérieur (3) selon l'une des revendications 1 à 12, qui est monté dans la cabine d'avion (1).
